# EUROPÄISCHE PATENTSCHRIFT

(11) **EP 2 507 589 B1**
(45) Veröffentlichungstag und Bekanntmachung des Hinweises auf die Patenterteilung: **05.07.2017**
(21) Anmeldenummer: 10792869.9
(22) Anmeldetag: 26.11.2010
(51) Int. Cl.: G01C 21/34

(54) **VERFAHREN ZUR VEREINFACHUNG EINER BESCHREIBUNG EINER FAHRTROUTE**
METHOD FOR SIMPLIFYING A DESCRIPTION OF A ROUTE
PROCÉDÉ POUR SIMPLIFIER UNE DESCRIPTION D'UN ITINÉRAIRE ROUTIER

(30) Priorität: 02.12.2009 DE 102009047407
(43) Veröffentlichungstag der Anmeldung: 10.10.2012
(73) Patentinhaber: Robert Bosch GmbH, 70442 Stuttgart (DE); Denso Corporation Ltd., Aichi (JP)
(72) Erfinder: WARTENBERG, Maylin, 38527 Meine/Wedelheim (DE)
(74) Vertreter: Slickers, Dirk
(86) Internationale Anmeldenummer: PCT/EP2010/068268
(87) Internationale Veröffentlichungsnummer: WO 2011/067169

(56) Entgegenhaltungen:
- US-A1- 2009 005 926

## Beschreibung

### Stand der Technik

Die vorliegende Erfindung bezieht sich auf ein Verfahren gemäß Anspruch 1 oder 9, ein Navigationsgerät gemäß Anspruch 10, sowie ein Computerprogrammprodukt gemäß Anspruch 11.

Bei herkömmlichen Navigationssystemen kann es erforderlich sein, dass die digitale Karte wegen einer Erneuerung ersetzt werden muss. In diesem Fall können beispielsweise bestehende, häufig befahrene und im Navigationsgerät abgespeicherte Routen nicht mehr weiterverwendet werden, da möglicherweise die bestehenden Routenpunkte, die die Fahrtroute in der Karte bezeichnen, nicht mehr in der neuen Karte auf die entsprechenden Wegabschnitte abgebildet werden können. Beispielsweise kann dies dadurch verursacht sein, dass die neue Straßenkarte von einem anderen Kartenhersteller stammt, der ein anderes geographisches Gitternetz verwendet, als der Kartenhersteller, von dem die zuvor verwendeten digitalen Karte geliefert wurde. In einem solchen Fall würden dann die abgespeicherten Referenz- oder Routenpunkte in der neuen Karte auf Positionen abgebildet, die nicht auf tatsächlichen Straßenabschnitten liegen. Um nun dennoch diese gespeicherten Fahrtrouten weiterverwenden zu können, ist deshalb eine Anpassung der Fahrtroute an die neu zu verwendende Straßenkarte erforderlich. Auch kann durch das Karten-Update eine leichte Verschiebung der Straßen erfolgen, beispielsweise wenn durch eine Baumaßnahme an einer bestimmten Position eine Straßenverbreiterung oder eine Kreisverkehrsführung neu gebaut wurde, die nun in der neu zu verwendenden digitalen Karte berücksichtigt ist. Im Stand der Technik ist hier bisher kein Ansatz bekannt, wie eine solche Übertragung der gespeicherten Fahrtroute unter Berücksichtigung der neuen digitalen Karte durchgeführt werden könnte.

Algorithmus verwendet wird, bei dessen Anwendung jeder n-te Routenpunkt aus der Liste entfernt wird, wobei die Variable n eine natürliche Zahl darstellt.; und
- Abspeichern der veränderten Liste von Routenpunkten, um eine Vereinfachung der Beschreibung der Fahrtroute zu erreichen.

Ferner wird ein Verfahren zur Dekodierung einer Fahrtroute eines Fahrzeugs aus einer Liste von Routenpunkten beschrieben, wobei das Verfahren die folgenden Schritte aufweist:
Im Stand der Technik ist lediglich ein sogenanntes Location Referencing bekannt, das die Bestimmung eines Ortes in einer digitalen Karte des Straßennetzwerkes bezeichnet (die sogenannte Kodierung) und die (maschinelle) Identifizierung desselben Ortes in einer zweiten digitalen Karte (die Dekodierung). Orte, sogenannte Locations, können dabei einzelne Punkte,
lineare Streckenabschnitte, Teilgraphen oder abstrakte Gebiete sein. Bisherige Location Referenzierungsverfahren wurden mit einem Fokus auf lineare Streckenabschnitte entwickelt. Ansätze zur Übertragung von Netzen bzw.
Teilgraphen des Straßengraphen existieren, wobei das Netz in lineare Locations zerlegt wird. Jedoch gibt es bisher keine genaue Beschreibung, wie diese Zerlegung funktioniert. Zudem sind diese Ansätze auch noch nicht getestet worden.

Die US 2009/0005926 A1 zeigt ein System und ein Verfahren zur Bestimmung einer Routenpunkt-Setzung für die Unterstützung einer Codierung oder Dekodierung eines Pfades.

### Offenbarung der Erfindung

Vor diesem Hintergrund wird mit der vorliegenden Erfindung ein Verfahren, weiterhin ein Navigationsgerät, das dieses Verfahren verwendet sowie schließlich ein entsprechendes Computerprogrammprodukt gemäß den unabhängigen Patentansprüchen vorgestellt. Vorteilhafte Ausgestaltungen ergeben sich aus den jeweiligen Unteransprüchen und der nachfolgenden Beschreibung.

Die vorliegende Erfindung schafft ein Verfahren zur Vereinfachung einer Beschreibung einer Fahrtroute gemäß Anspruch 1.

Die vorliegende Erfindung schafft ferner ein Navigationsgerät, das ausgebildet ist, um die Schritte des erfindungsgemäßen Verfahrens durchzuführen bzw. umzusetzen.

Auch durch diese Ausführungsvariante der Erfindung in Form eines Navigationsgeräts kann die der Erfindung zugrunde liegende Aufgabe schnell und effizient gelöst werden.

Unter einem Navigationsgerät kann vorliegend ein elektrisches Gerät oder eine Rechnereinheit verstanden werden, das oder die Sensorsignale verarbeitet. Das Navigationsgerät kann eine Schnittstelle aufweisen, die hard- und/oder softwaremäßig ausgebildet sein kann. Bei einer hardwaremäßigen Ausbildung können die Schnittstellen beispielsweise Teil eines sogenannten System-ASICs sein, der verschiedenste Funktionen des Navigationsgeräts beinhaltet. Es ist jedoch auch möglich, dass die Schnittstellen eigene, integrierte Schaltkreise sind oder zumindest teilweise aus diskreten Bauelementen bestehen. Bei einer softwaremäßigen Ausbildung können die Schnittstellen Softwaremodule sein, die beispielsweise auf einem Mikrocontroller neben anderen Softwaremodulen vorhanden sind.

Von Vorteil ist auch ein Computerprogrammprodukt mit Programmcode, der auf einem maschinenlesbaren Träger wie einem Halbleiterspeicher, einem Festplattenspeicher oder einem optischen Speicher gespeichert ist und zur Durchführung des Verfahrens nach einem der vorstehend beschriebenen Ausführungsformen verwendet wird, wenn das Programm auf einem Navigationsgerät ausgeführt wird.

Die vorliegende Erfindung basiert auf der Erkenntnis, dass eine einfache Differenzierung eines Teilgrafen eines Straßennetzwerks dann möglich ist, wenn eine zu fahrende Fahrtroute durch wenige Routenpunkte beschrieben wird. Um eine solche Darstellung der Fahrtroute durch möglichst wenige Routenpunkte zu ermöglichen, soll zunächst bei einer Codierung der Fahrtroute eine Reduktion der Routenpunkte derart erfolgen, so dass eine Liste mit möglichst wenigen Routenpunkten die zu wählende oder die gewählte Fahrtroute möglichst genau beschreibt. Hierzu werden bestimmte Algorithmen verwendet, um eine Veränderung der Liste der Routenpunkte vorzunehmen, in dem beispielsweise diejenigen Routenpunkte gestrichen werden, die Teilabschnitte der Fahrtroute auf dem Straßennetzwerk repräsentieren, die eine sehr geringe Weglänge aufweisen. Auch können zur Vereinfachung der Liste von Routenpunkten jeder zweite, dritte, etc. Routenpunkt aus der Liste gestrichen werden, wodurch sich zwar eine ungenauere Beschreibung der Fahrtroute ergibt, die jedoch noch ausreichend genau rekonstruierbar ist, wenn die verbleibenden Routenpunkte in eine digitale Karte übertragen und beispielsweise die kürzeste Verbindung zwischen diesen Routenpunkten als ein Teilabschnitt der Fahrtroute ermittelt wird. Auf diese Weise kann auch eine gewünschte Fahrtroute, die auf der Basis einer ersten digitalen Karte ermittelt wurde, in eine zweite digitale Karte übertragen werden. In diesem Fall wird die Dekodierung der Fahrtroute an Hand der Liste der Routenpunkte beispielsweise derart ausgeführt, dass die Routenpunkte aus der Liste in die zweite digitale Karte übertragen werden. Wird dabei festgestellt, dass geographische Koordinaten, die beispielsweise die entsprechenden Routenpunkte bilden, in der zweiten digitalen Karte nicht auf einer Straße oder einem befahrbaren Weg liegen, kann eine Verschiebung dieser Routenpunkte auf die nächstgelegene Straße oder den nächstgelegenen Weg erfolgen. Die gewünschte Fahrtroute kann dann unter Verwendung der zweiten digitalen Karte derart dekodiert werden, dass diejenigen Straßen oder Wege aus der zweiten digitalen Karte als Teilabschnitte der gewünschten Fahrtroute ausgewählt werden, die die kürzeste Verbindung zwischen den Routenpunkten oder den entsprechend verschobenen Routenpunkten bilden.

Die vorliegende Erfindung bietet dabei den Vorteil, dass erstens eine bisher bekannte und oftmals gefahrene Fahrtroute sehr einfach und Speicherplatzsparend durch die genannte kurze Liste von Routenpunkten abgespeichert werden kann. Zweitens kann die Liste der Routenpunkte sehr effizient verwendet werden, um eine Übertragung einer gewünschten oder einer zu fahrenden Fahrtroute in eine andere digitale Karte zu vereinfachen. Dabei ist sowohl im ersten als auch und zweiten vorstehend genannten Aspekt von Vorteil, dass nur ein geringer numerischer oder schaltungstechnischer Aufwand zur Umsetzung oder Realisierung der vorliegenden Erfindung erforderlich ist.

Gemäß einer Ausführungsform der Erfindung können im Schritt des Einlesens der Fahrtroute Routenpunkte eingelesen werden, die geographische Koordinaten repräsentieren. Eine derartige Ausführungsform der vorliegenden Erfindung bietet den Vorteil, dass die Angabe von geographischen Koordinaten eine sehr präzise Bestimmung der Routenpunkte ermöglicht. Auch bei einer Unterscheidung von Gitternetzen von einer digitalen ersten Karte, aus der die Routenpunkte generiert wurden, gegenüber einer digitalen zweiten Karte, in der die Liste der Routenpunkte verwendet werden soll, kann dann über eine sehr einfache entsprechende Transformationen eine entsprechende Verschiebung und eindeutige Zuordnung der Routenpunkte auch in der neuen digitalen zweiten Karte durchgeführt werden.

Auch kann in einer weiteren Ausführungsform der Erfindung im Schritt des Veränderns ein Algorithmus verwendet werden, bei dessen Anwendung diejenigen Routenpunkte aus der Liste entfernet werden, die ein Teilsegment der Fahrtroute repräsentieren, das einen Wegabschnitt abbildet, der kürzer als eine vorbestimmte Weglänge ist. Eine derartige Ausführungsform der vorliegenden Erfindung bietet eine sehr einfache Möglichkeit, eine Anzahl von Routenpunkten in der Liste der Routenpunkte zu reduzieren, ohne dass ein wesentlicher Informationsverlust zu befürchten ist. Beispielsweise können alle Routenpunkte aus der Liste entfernt werden, die ein Teilsegment der Fahrtroute repräsentieren, das einen Weg oder eine Straße in der digitalen Straßenkarte abbildet, die kürzer als 100 m ist. Erfindungsgemäss wird im Schritt des Veränderns ein Algorithmus verwendet, bei dessen Anwendung jeder n-te Routenpunkt aus der Liste entfernt wird, wobei die Variable n eine natürliche Zahl darstellt. Eine derartige Ausführungsform der vorliegenden Erfindung bietet den Vorteil, dass hierdurch auf einfache Weise eine Anzahl von Routenpunkten aus der Liste der Routenpunkte entfernt werden kann, ohne eine signifikante Verschlechterung einer Rekonstruktionsmöglichkeit der gewünschten Fahrtroute zu bewirken.

In einer weiteren Ausführungsform der Erfindung kann das Verfahren ferner einen Schritt des Empfangens von weiteren Routenpunkten aufweisen, wobei die weiteren Routenpunkte Teilsegmente einer Alternative eines Abschnitts der Fahrtroute repräsentierten und wobei im Schritt des Veränderns zumindest einer der weiteren Routenpunkte in die Liste der Routenpunkte aufgenommen wird. Besonders vorteilhaft ist es, wenn im Schritt des Veränderns zusätzliche Routenpunkte in die Liste der Routenpunkte für die Fahrtroute aufgenommen werden, wobei die zusätzlichen Routenpunkte Teilsegmente einer Alternative eines Abschnitts der Fahrtroute repräsentierten. Eine derartige Ausführungsform der vorliegenden Erfindung bietet den Vorteil, dass auf einfache Weise verschiedene Fahrtroutenalternativen abgespeichert werden können, ohne für jede dieser Alternativen eine eigene separate Liste von Routenpunkten generieren zu müssen. Zusätzlich oder alternativ kann auch das Verfahren während der Fahrt eines Fahrzeugs wiederholt ausgeführt werden, wobei nach einem vorausgegangenen Ausführungszyklus des Verfahrens im Schritt des Einlesens in einem nachfolgenden Ausführungszyklus des Verfahrens zumindest ein neuer Routenpunkt während der Fahrt des Fahrzeugs eingelesen wird, der eine aktuelle Position des Fahrzeugs repräsentiert, wobei durch das wiederholte Ausführen des Verfahrens die Fahrtroute des Fahrzeugs aktualisiert wird. Eine derartige Ausführungsform der vorliegenden Erfindung bietet den Vorteil, dass nicht nur für eine vorgefertigte Fahrtroute eine Optimierung ausgeführt werden kann, sondern dass auch während der Fahrt eine Aufzeichnung der aktuell gefahrenen Fahrtroute möglich ist. Die Aufzeichnung der Fahrtroute kann dann in Speicherplatz-sparender Weise in einer Liste von Routenpunkten abgelegt werden, die in analoger Weise zur vorstehenden Beschreibung optimiert werden kann.

Um auch eine Fahrtroute in bisher noch nicht befahrene Teilabschnitte einer digitalen Straßenkarte effizient abspeichern zu können, kann auch in einer anderen Ausführungsform der Erfindung das Verfahren ferner einen Schritt des Erfassens der aktuellen Position des Fahrzeugs aufweisen, wobei das Verfahren weiterhin einen Schritt des Abgleichens der erfassten aktuellen Position des Fahrzeugs mit einem durch einen Routenpunkt repräsentierten Teilabschnitt der Fahrtroute, wobei im Schritt des Veränderns der Liste ein Routenpunkt, der den aktuell befahrenen Teilabschnitt der Fahrtoute repräsentiert, der Liste hinzugefügt wird, wenn ein Routenpunkt, der den aktuell befahrenen Teilabschnitt der Fahrtroute repräsentiert, nicht in der Liste gespeichert ist.

Die Erfindung wird anhand der beigefügten Zeichnungen beispielhaft näher erläutert. Es zeigen:
- Fig. 1: eine Darstellung einer digitalen Karte, in der eine Fahrtroute von einem Startort zu einem Zielort durch mehrere Routenpunkte markiert ist;
- Fig. 2-7: Darstellungen der digitalen Karte, in der die Fahrtroute vom Startort zum Zielort durch mehrere Routenpunkte markiert sind, wobei ein weiteres Ausführungsbeispiel der vorliegenden Erfindung auf die Routenpunkte oder eine entsprechende Liste der Routenpunkte angewendet wurde;
- Fig. 8-13: Darstellungen der digitalen Karte, in der die Fahrtroute vom Startort zum Zielort durch mehrere Routenpunkte markiert sind, wobei ein anderes Ausführungsbeispiel der vorliegenden Erfindung auf die Routenpunkte oder eine entsprechende Liste der Routenpunkte angewendet wurde;
- Fig. 14: ein Ablaufdiagramm eines Ausführungsbeispiels der vorliegenden Erfindung als Verfahren;
- Fig. 15: ein Ablaufdiagramm eines weiteren Ausführungsbeispiels der vorliegenden Erfindung als Verfahren; und
- Fig. 16: ein Blockschaltbild eines Ausführungsbeispiels der Erfindung unter Verwendung eines Navigationsgerätes.

Gleiche oder ähnliche Elemente können in den Figuren durch gleiche oder ähnliche Bezugszeichen versehen sein, wobei auf eine wiederholte Beschreibung verzichtet wird. Ferner enthalten die Figuren der Zeichnungen, deren Beschreibung sowie die Ansprüche zahlreiche Merkmale in Kombination. Einem Fachmann ist dabei klar, dass diese Merkmale auch einzeln betrachtet werden oder sie zu weiteren, hier nicht explizit beschriebenen Kombinationen zusammengefasst werden können. Weiterhin ist die Erfindung in der nachfolgenden Beschreibung unter Verwendung von unterschiedlichen Maßen und Dimensionen erläutert, wobei die Erfindung nicht auf diese Maße und Dimensionen eingeschränkt zu verstehen ist. Ferner können erfindungsgemäße Verfahrensschritte wiederholt sowie in einer anderen als in der beschriebenen Reihenfolge ausgeführt werden. Umfasst ein Ausführungsbeispiel eine "und/oder" Verknüpfung zwischen einem ersten Merkmal/Schritt und einem zweites Merkmal/Schritt, so kann dies so gelesen werden, dass das Ausführungsbeispiel gemäß einer Ausführungsform sowohl das erste Merkmal / den ersten Schritt als auch das zweite Merkmal /den zweiten Schritt und gemäß einer weiteren Ausführungsform entweder nur das erste Merkmal /Schritt oder nur das zweite Merkmal /Schritt aufweist.

Ein wichtiges Ziel der Erfindung ist die Entwicklung einer Methode für die Referenzierung eines Teilgraphen (insbesondere für eine gewünschte Fahrtroute) des Straßengraphen, welcher durch die natürliche Routenwahl des Fahrers entsteht und daher in der Regel zusammenhängend ist. Dabei sollte insbesondere das Problem der Einteilung der Fahrtstrecke oder Fahrtroute in zu referenzierende Abschnitte gelöst werden, damit der Teilgraph nach und nach in annehmbarer Zeit dekodiert werden kann und die hier vorgestellte Methode somit applikationstauglich ist.

Der nachfolgend vorgeschlagene Ansatz befasst sich somit mit der Referenzierung eines Teilgraphen des Straßengraphen, der beispielsweise nach und nach aus den gefahrenen Strecken des Fahrers entsteht. Die Einteilung in zu referenzierenden Abschnitte erfolgt beispielsweise parallel zur abgefahrenen Strecke. Ein wichtiger Aspekt des hier vorgeschlagenen Ansatzes ist die Bestimmung von festen Positionen im Straßennetz, sogenannten Routing-Punkten oder Routenpunkten, für die eine Vorgänger-Nachfolger Beziehung gepflegt wird. Diese Routenpunkte können dann in einer Liste abgespeichert werden, so dass die Vorgänger-Nachfolger-Beziehung in der Liste mitgespeichert wird. Aufeinanderfolgende Routing-Punkte begrenzen die zu referenzierenden Abschnitte. Die Wahl der Positionen und Abstände zwischen zwei aufeinanderfolgenden Routing-Punkten unterliegt bestimmten Bedingungen, die eine Identifizierung in der zweiten Karte möglich machen (sollen). Bei dieser Identifizierung wird dann mit einem Paar von Routing-Punkten begonnen, und der gesamte Teilgraph dann nach und nach mit einem entsprechenden Algorithmus wie etwa der Breitensuche dekodiert.

Im Folgenden wird die Kodierung und die Dekodierung der Referenzierungsmethode detailliert beschrieben. Die Wahl der Routing-Punkte und deren Abstände für aufeinanderfolgende unterliegt bestimmten Bedingungen, die die Identifizierung in der zweiten Karte möglich machen sollen. Beispielsweise können hier die sogenannten "Routing Point Rules" aus dem Standard AGORA-C verwendet werden.

Zunächst wird die Codierung der Fahrtroute in Routenpunkte anhand unterschiedlicher Ausführungsbeispiele der Erfindung näher beschrieben. Ein wichtiger Aspekt der Erfindung in Bezug auf die Codierung ist die Auswahl und Positionierung der Routing-Punkte. Mit welchen Attributen bzw. Methoden diese Routing-Punkte dann beschrieben werden ist der zweite Schritt. Nachfolgend werden zwei verschiedene Ansätze zur Auswahl von Routing Points entlang der gefahrenen Strecke präsentiert.

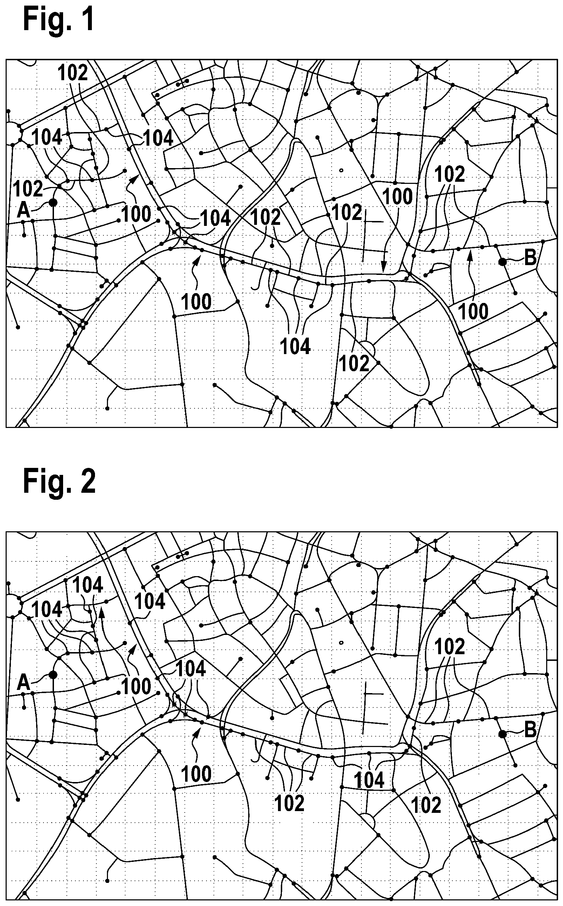

Die Beschreibung der ersten Version startet mit Fig. 1, in der eine Darstellung einer digitalen Karte wiedergegeben ist, in der eine Fahrtroute 100 von einem Startort A zu einem Zielort B durch mehrere Routenpunkte markiert ist. Angenommen, der Fahrer startet bei Position A und fährt in Richtung B. Auf jedem Link 102, d.h. jedem Straßenstück dargestellt durch zwei begrenzende Punkte, den der Fahrer befährt, wird ein Routing-Punkt 104 gesetzt, dargestellt durch die schwarzen Karos. Die Positionierung auf dem Link 102 geschieht entweder durch spezielle Gütekriterien, wie in der Methode MEI-LIN verwendet, oder nach starren Regeln, wie stets mittig. Nach einer bestimmten gefahrenen Strecke oder wenn der Fahrer von unbekannten auf bekannte Links stößt, werden redundante Routing-Punkte 104 wie folgt eliminiert. Zuerst werden beispielsweise alle Routing-Punkte 102 auf "kurzen" Links entfernt wie etwa die durchgestrichenen Routenpunkte in Fig. 2, solange dann noch die oben genannten Bedingungen für aufeinanderfolgende Routing-Punkte jeweils erfüllt sind. Das Attribut "kurz" kann dabei sowohl von der Länge in Metern (beispielsweise für tatsächliche Abschnitte der Fahrtroute, die kürzer als 100 m bei außerörtlichen Straßen oder kürzer als 50 m bei innerörtlichen Straßen sind), als auch von der Straßenklasse oder der Zugehörigkeit zu einer komplexen Kreuzung abhängig sein.

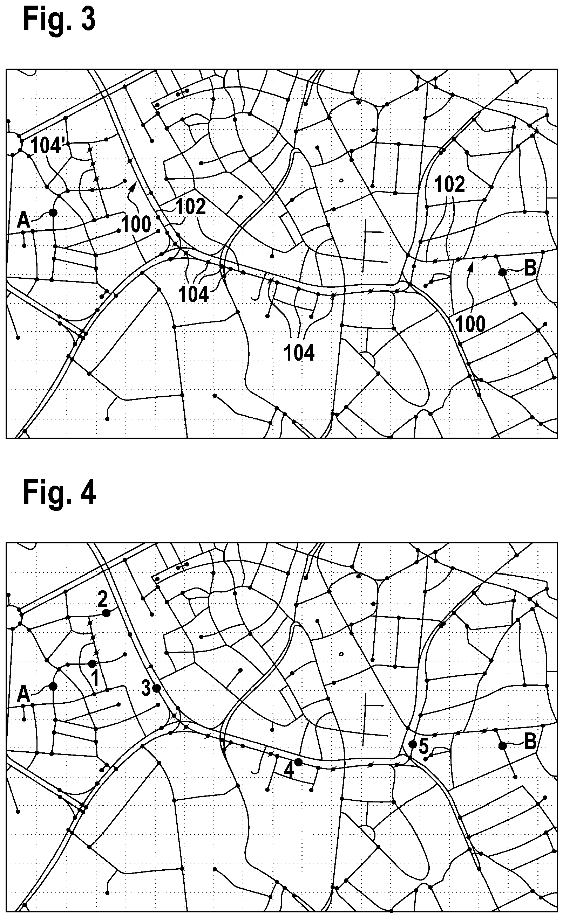

Im zweiten Schritt werden weitere Routing-Punkte 102 eliminiert wie es aus der Fig. 3 ersichtlich ist. Dieses geschieht beispielswiese nach einer festgelegten Vorgehensweise, wie beispielsweise der iterativen Eliminierung jedes zweiten Punktes 104'. Andererseits könnte auch ein Gütekriterium für Routing-Punkte 104 entwickelt werden, welches die Punkte 104 hoch bewertet, die wahrscheinlich in einer zweiten Karte besser wiedergefunden werden können. Diese Punkte können beispielsweise Punkte 104 sein, die sehr nahe von Kreuzungen von Straßen liegen, so dass auch in der zweiten Karte eine entsprechende Position einfach zu ermitteln ist. Eine Eliminierung dieser Punkte, die als "hoch" oder "wichtig" für die Rekonstruktion der Fahrtroute betrachtet werden, kann dann vermieden werden. Dann erfolgt die Eliminierung von zumindest einem Teil der nicht als "hoch" bewerteten und damit als "wichtig" betrachteten Routenpunkte nach diesem Gütekriterium, solange die oben genannten Bedingungen erfüllt sind. Fig. 4 zeigt ein Beispiel von übriggebliebenen und somit notwendigen Routing-Punkten (die mit den Nummern 2 bis 5 bezeichnet sind) zwischen dem Startort A und dem Zielort B.

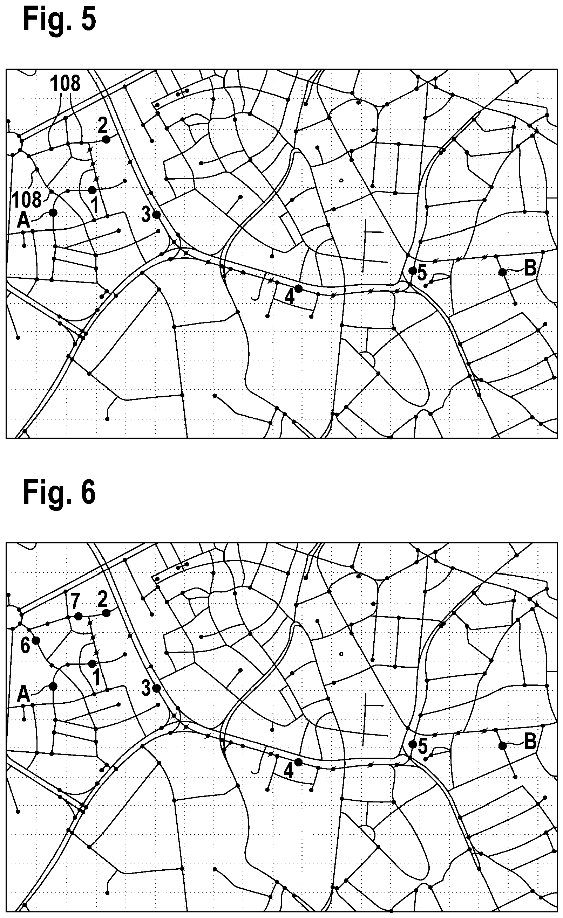

Zu jedem Link sollte außerdem gespeichert werden, ob er schon befahren wurde oder nicht. Wenn der Fahrer eine Route wählt, die teilweise bekannt ist und teilweise nicht, brauchen beispielsweise Routing-Punkte 108 nur auf den "neuen" Links (d.h. Teilabschnitte der Fahrtroute) gesetzt werden. Dies geschieht entsprechend der Darstellung aus Fig. 5 in der gleichen Weise, nur die entsprechenden Vorgänger-Nachfolger-Beziehungen der neuen Routing-Punkte 108 zu bereits gesetzten Routing-Punkten 104 sollten in einem solchen Fall aktualisiert werden. Nach der Eliminierung von einzelnen der neuen Routing-Punkte 108, beispielsweise entsprechend einem der vorstehend beschriebenen Schritte, gibt es zwei neue Routing-Punkte (mit der Bezeichnung 6 und 7) wie es beispielhaft in der Fig. 6 dargestellt ist. Insgesamt entsteht dann etwa ein Szenario wie es in der Darstellung aus in Bild 7 wiedergegeben ist. Die verbleibenden Routenpunkte werden dann in eine Liste eingetragen und abgespeichert, wobei in dieser Liste auch ein Zusammenhang zwischen den einzelnen Routenpunkten, deren Vorgängern und deren Nachfolgern vermerkt ist.

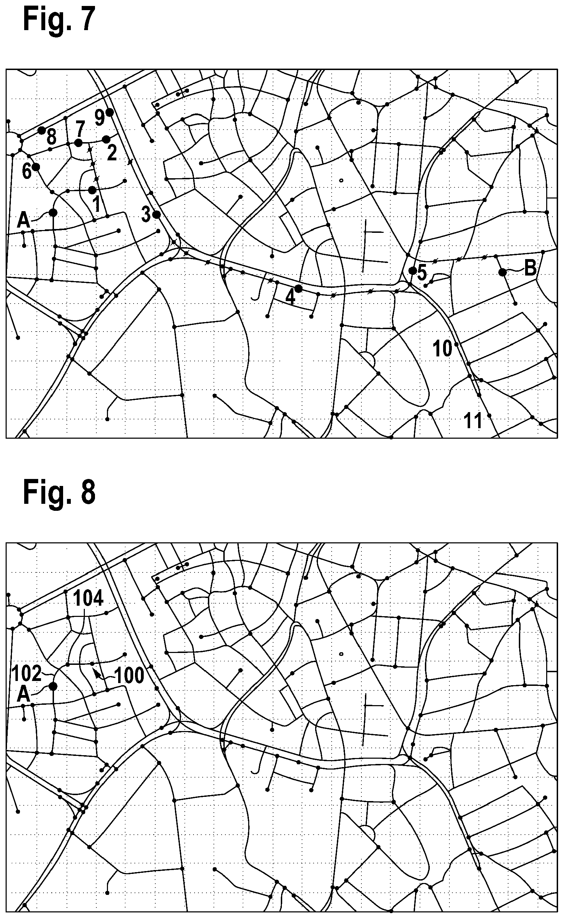

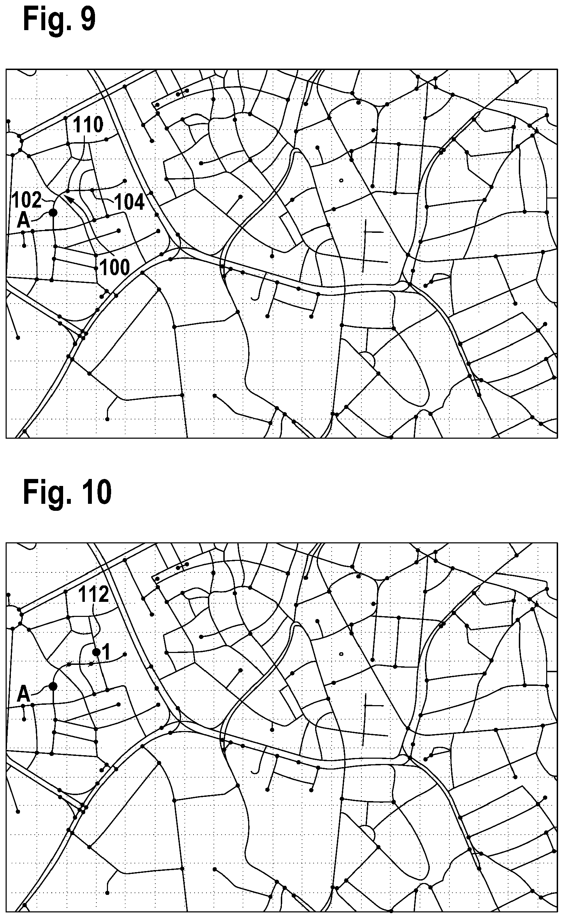

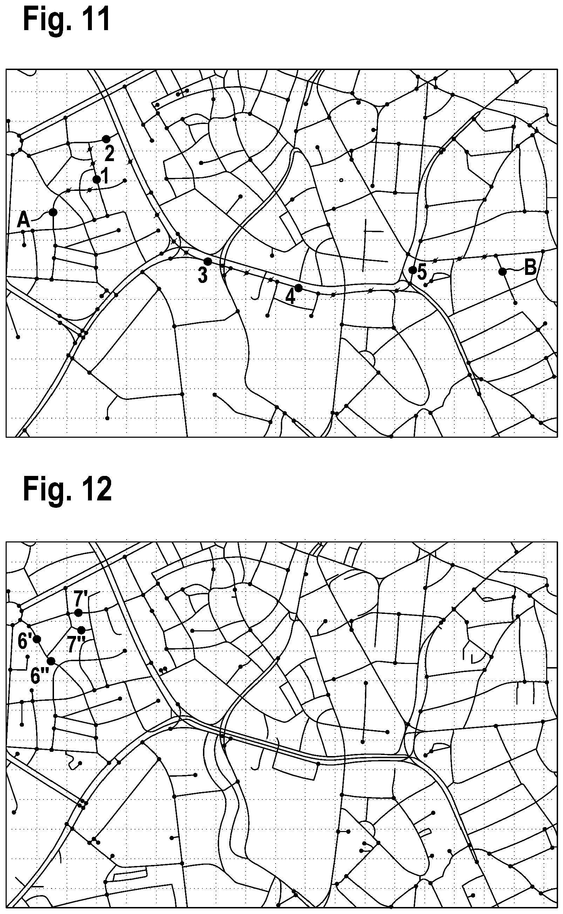

Bei der zweiten möglichen Variante des hier vorgeschlagenen Ansatzes werden die Routing-Punkte zeitnah dem eigentlichen Befahren der Links 102 festgelegt. Daher kann diese Variante auch als "as-you-go"-Wahl bezeichnet werden. Startet der Fahrer beispielsweise wieder bei Position A wie es in der Fig. 8 dargestellt ist (wobei nun der Zielpunkt B noch nicht bekannt sein braucht und daher in der Fig. 8 auch noch nicht eingetragen ist), so wird zunächst ein Routing-Punkt 104 auf jeden Link gesetzt, der nicht "kurz" ist. Als "kurz" kann dabei ein Link 102 oder ein Teilabschnitt der (gewünschten) Fahrtroute gelten, der beispielsweise ein in der vorstehenden Beschreibung genanntes Kriterium erfüllt. Wenn der Fahrer nun jeweils einen Link 102 verlässt und auf einen neuen Link 102 fährt, wird geprüft, ob der zuvor gesetzte Routing-Punkt 104 eliminiert werden kann, indem die Bedingungen für eine Elimination von aufeinanderfolgenden Routing-Punkte104 geprüft wird. In dem in Fig. 8ff vorgestellten Beispiel kann also ein zuvor gesetzter Routing-Punkt 110 eliminiert werden, wie es mit Bezug zu Fig. 9 dargestellt. Fig. 10 zeigt beispielsweise den ersten notwendigen Routing-Punkt 1, da andererseits zwei verschiedene Wege zwischen A und dem auf Routing-Punkt 1 folgenden Routing-Punkt 112 existieren würden, die ähnlich lang sind und somit eine mögliche Decodierungsregel verletzt wäre. Dieser Ansatz lässt sich so weit fortsetzen, so dass eine Fahrtroute zwischen dem Startpunkt A und dem Zielpunkt B aufgebaut werden kann, die die entstehenden notwendigen Routing-Punkte entsprechend der Darstellung aus Fig. 11 aufweist. Die Vorgehensweise für bisher unbekannte Teilstücke oder Teilabschnitte der Fahrtroute funktioniert somit genauso wie die Vorgehensweise bei einer bekannten vollständigen Fahrtroute und die Vorgänger-Nachfolger Beziehungen sollten wie bei der ersten vorstehend beschriebenen Variante entsprechend gepflegt werden.

Wenn nun eine Liste von Routenpunkten erhalten wird, die eine gewünschte Fahrtroute repräsentiert und die beispielsweise entsprechend der vorstehenden Vorgehensweise erstellt wurde, dann kann diese Fahrtroute auch auf eine zweite digitale Straßenkarte übertragen (d.h. decodiert) werden, ohne dass hierzu ein größerer Aufwand erforderlich ist. Die Dekodierung setzt auf die Identifizierung der Routing-Punkte, damit dann die zu referenzierten Teilstücke zwischen zwei Routing-Punkten nach und nach identifiziert werden können. Es wird zunächst bei einem Vorgänger-Nachfolger Paar der Routenpunkte aus der Liste der Routenpunkte begonnen, beispielsweise in der Nähe der aktuellen Position, die für ein Fahrzeug aus geographischen Koordinaten ermittelt wurde. Für Vorgänger und Nachfolger existieren, je nach Attributen oder Methoden, die diese beschreiben, mehrere mögliche Positionen in der zweiten Karte, wie es in der Fig. 12 dargestellt ist. Die Punkte 6 und 7 im Beispiel haben je zwei Alternativen, die in der Fig. 12 mit 6' und 6" oder 7' und 7" bezeichnet sind. Dann werden Routen zwischen allen Alternativen (d.h. zwischen 6' und 7', 6" und 7', 6" und 7' oder 6" und 7") berechnet. Falls nur zwischen einem Paar von Routenpunkten eine Route (d.h. eine Weglänge) existiert, deren Länge beispielsweise annähernd die übertragene Länge hat (falls die Länge als Attribut für die Vorgänger-Nachfolger-Beziehung zwischen dem Routenpunkten-Paar) gespeichert wurde, so sind die korrekten Routenpunkte identifiziert.

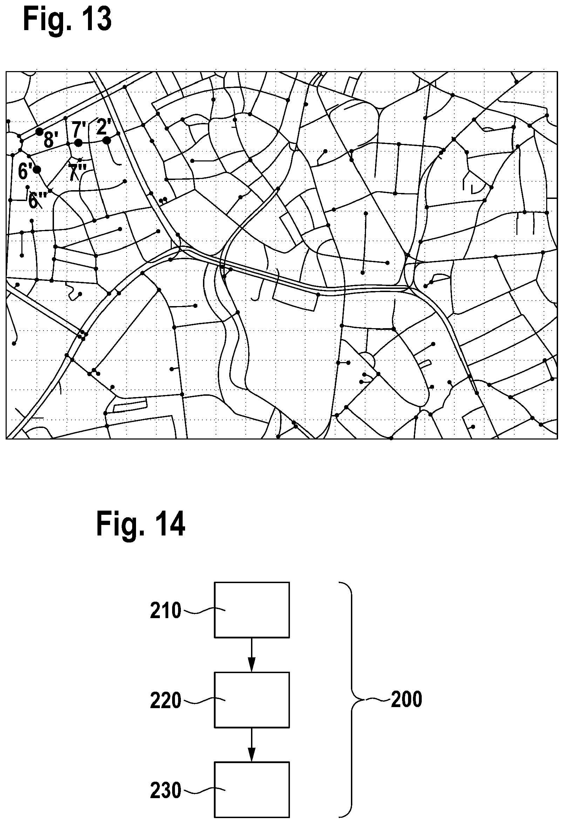

Andernfalls fährt man mit einem Nachfolger des Nachfolgers, oder mit einem anderen Vorgänger zu dem gewählten Nachfolger fort, bis ein Paar eindeutig identifiziert werden konnte. Dieses Startpaar erleichtert dann die Identifizierung der anderen zusammenhängenden Routing-Punkte. Im Beispiel aus der Fig. 13 könnten beispielsweise Routen zwischen den Punkte 2' und 8' oder zwischen 6' und 8' berechnet werden, um 6" und 7" Ausschließen zu können. Denn für diese beiden Punkte existiert jeweils nur eine mögliche Position.

Um den Aufwand für das ausschließen von Alternativen zu reduzieren, könnten Methoden wie MEI-LIN benutzt werden, um die Routing-Punkte zu referenzieren und Alternativen frühzeitig auszuschließen. Ist also ein Startpaar identifiziert, so werden die anderen Punkte nach einem bestimmten Algorithmus wie etwa der Breitensuche nach und nach abgearbeitet, um den gesamten Teilgraph in annehmbarer Zeit dekodieren zu können. Der Routing-Algorithmus sollte zudem Gewichte relativ zur Straßenklasse berücksichtigen, damit wichtigere Straßen vorgezogen werden.

Gemäß der Darstellung aus Fig. 14 schafft die vorliegende Erfindung entsprechend einem Ausführungsbeispiel ein Verfahren 200 zur Vereinfachung einer Beschreibung einer Fahrtroute, die durch eine Liste von Routenpunkten repräsentiert ist, wobei das Verfahren einen Schritt des Einlesens 210 einer Fahrtroute umfasst, die durch Liste von Routenpunkten abgebildet wird, die eine Mehrzahl von Routenpunkten repräsentiert ist, wobei jeder Routenpunkt ein unterschiedliches Teilsegment einer Fahrtroute aus einer digitalen Straßenkarte repräsentiert. Ferner weist das Verfahren 200 einen Schritt des Veränderns 220 der Liste von Routenpunkten entsprechend einem vorbestimmten Algorithmus auf, um eine veränderte Liste von Routenpunkten zu erhalten, die die Fahrtroute repräsentiert. Schließlich umfasst das Verfahren einen Schritt des Abspeicherns 230 der veränderten Liste von Routenpunkten, um eine Vereinfachung der Beschreibung der Fahrtroute zu erreichen.

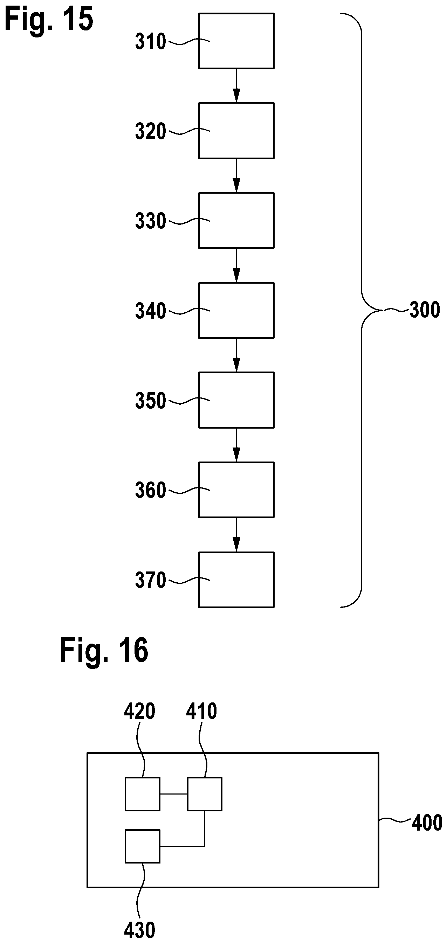

Gemäß der Darstellung aus Fig. 15 schafft die vorliegende Erfindung entsprechend einem anderen Ausführungsbeispiel ein Verfahren 300 zur Dekodierung einer Fahrtroute eines Fahrzeugs aus einer Liste von Routenpunkten, wobei das Verfahren einen Schritt des Einlesens 310 der Liste von Routenpunkten aufweist, wobei jeder der Routenpunkt einen anderen Teilabschnitt einer zu dekodierenden Fahrtoute aus einer digitalen Straßenkarte repräsentiert. Weiterhin umfasst das Verfahren einen Schritt des Empfangens 320 einer digitalen Straßenkarte und einen Schritt des Auswählens 330 von zumindest zwei der Routenpunkte und Abbilden der ausgewählten Routenpunkte auf unterschiedliche erste Abschnitte in der digitalen Straßenkarte, wobei die unterschiedlichen ersten Abschnitte mögliche Teilabschnitte einer von dem Fahrzeug zu wählenden Fahrtroute repräsentieren. Ferner umfasst das Verfahren 300 einen Schritt des Bestimmens 340 der gesamten ersten Weglänge, wobei die gesamte erste Weglänge auf der Basis der Lägen der einzelnen ersten Abschnitte aus der digitalen Straßenkarte ermittelt wird. Auch erfolgt in einem weiteren Schritt des Verfahren 300 ein Abbilden 350 der ausgewählten Routenpunkte auf unterschiedliche zweite Abschnitte der digitalen Straßenkarte, die wobei die unterschiedlichen zweiten Abschnitte mögliche Teilabschnitte der von dem Fahrzeug zu wählenden Fahrtroute repräsentieren. In einem weiteren Schritt 360 des Verfahrens 300 erfolgt ein Bestimmen der gesamten zweiten Weglänge, wobei die gesamte zweite Weglänge auf der Basis der Länge der einzelnen zweiten Abschnitte aus der digitalen Straßenkarte ermittelt wird. Schließlich wird in einem Schritt 370 des Verfahrens 300 ein Zuordnen der Routenpunkte zu den ersten Abschnitten ausgeführt, wenn die bestimmte erste Weglänge kürzer als die bestimmte zweite Weglänge ist.

Die vorliegende Erfindung kann weiterhin in einem Navigationsgerät 410 eines Fahrzeugs 400 ausgeführt werden, wie es beispielsweise in Fig. 16 dargestellt ist. Dabei kann das Navigationsgerät 410 Daten aus einem Empfänger 420 für Satellitennavigationssignale empfangen und diese mit einer digitalen Karte verknüpfen, die beispielsweise aus einem Speicher 430 für eine digitale Karte in das Navigationsgerät 410 geladen werden. In dem Navigationsgerät 410 mit kann dann die Liste der Routenpunkte abgespeichert werden, so dass bei einem Update der digitalen Straßenkarte in den Speicher 430 eine gewünschte Fahrtroute an Hand der in dem Navigationsgerät 410 gespeicherten Liste von Routenpunkten realisiert werden kann.

## Patentansprüche

1. Verfahren (200) zur Vereinfachung einer Beschreibung einer Fahrtroute (100), die durch eine Liste von Routenpunkten (1-9, 104) repräsentiert ist, wobei das Verfahren (200) die folgenden Schritte aufweist:
- Einlesen (210) einer Fahrtroute (100), die durch Liste von Routenpunkten (104) abgebildet wird, die eine Mehrzahl von Routenpunkten (104) repräsentiert ist, wobei jeder Routenpunkt (104) ein unterschiedliches Teilsegment (102) einer Fahrtroute (100) aus einer digitalen Straßenkarte repräsentiert;
- Verändern (220) der Liste von Routenpunkten (104) entsprechend einem vorbestimmten Algorithmus, um eine veränderte Liste von Routenpunkten (1-9) zu erhalten, die die Fahrtroute (100) repräsentiert, wobei im Schritt des Veränderns (220) ein Algorithmus verwendet wird, bei dessen Anwendung jeder n-te Routenpunkt (104) aus der Liste entfernt wird, wobei die Variable n eine natürliche Zahl darstellt; und
- Abspeichern (230) der veränderten Liste von Routenpunkten (1-9), um eine Vereinfachung der Beschreibung der Fahrtroute (100) zu erreichen.

2. Verfahren (200) gemäß Anspruch 1, **dadurch gekennzeichnet, dass** im Schritt des Einlesens (210) der Fahrtroute (100) Routenpunkte (104) eingelesen werden, die geographische Koordinaten repräsentieren.

3. Verfahren (200) gemäß einem der vorangegangenen Ansprüche, **dadurch gekennzeichnet, dass** im Schritt des Veränderns (220) ein Algorithmus verwendet wird, bei dessen Anwendung diejenigen Routenpunkte (104) aus der Liste entfernet werden, die ein Teilsegment (102) der Fahrtroute (100) repräsentieren, das einen Wegabschnitt abbildet, der kürzer als eine vorbestimmte Weglänge ist.

4. Verfahren (200) gemäß einem der vorangegangenen Ansprüche, **dadurch gekennzeichnet, dass** das Verfahren (200) ferner einen Schritt des Empfangens von weiteren Routenpunkten (108) aufweist, wobei die weiteren Routenpunkte (108) Teilsegmente (104) einer Alternative eines Abschnitts der Fahrtroute (100) repräsentierten und wobei im Schritt des Veränderns (220) zumindest einer der weiteren Routenpunkte (108) in die Liste der Routenpunkte (1-9) aufgenommen wird.

5. Verfahren (200) gemäß einem der vorangegangenen Ansprüche, **dadurch gekennzeichnet, dass** im Schritt des Veränderns (220) zusätzliche Routenpunkte (108) in die Liste der Routenpunkte (1-9) für die Fahrtroute (100) aufgenommen werden, wobei die zusätzlichen Routenpunkte (108) Teilsegmente (102) einer Alternative eines Abschnitts der Fahrtroute (100) repräsentierten.

6. Verfahren (200) gemäß einem der vorangegangenen Ansprüche, **dadurch gekennzeichnet, dass** das Verfahren (200) während der Fahrt eines Fahrzeugs (400) wiederholt ausgeführt wird, wobei nach einem vorausgegangenen Ausführungszyklus des Verfahrens (200) im Schritt des Einlesens (210) in einem nachfolgenden Ausführungszyklus des Verfahrens (200) zumindest ein neuer Routenpunkt (110) während der Fahrt des Fahrzeugs (400) eingelesen wird, der eine aktuelle Position des Fahrzeugs (400) repräsentiert, wobei durch das wiederholte Ausführen des Verfahrens (200) die Fahrtroute des Fahrzeugs (400) aktualisiert wird.

7. Verfahren (200) gemäß einem der vorangegangenen Ansprüche, **dadurch gekennzeichnet, dass** das Verfahren (200) ferner einen Schritt des Erfassens der aktuellen Position des Fahrzeugs (400) aufweist, wobei das Verfahren (200) weiterhin einen Schritt des Abgleichens der erfassten aktuellen Position des Fahrzeugs (400) mit einem durch einen Routenpunkt (110) repräsentierten Teilabschnitt (102) der Fahrtroute (100) aufweist, wobei im Schritt des Veränderns (220) der Liste ein Routenpunkt (110), der den aktuell befahrenen Teilabschnitt (102) der Fahrtoute (100) repräsentiert, der Liste hinzugefügt wird, wenn ein Routenpunkt (110), der den aktuell befahrenen Teilabschnitt der Fahrtroute (100) repräsentiert, nicht in der Liste gespeichert ist.

8. Navigationsgerät (410), das ausgebildet ist, um die Schritte eines Verfahrens (200, 300) gemäß einem der Ansprüche 1 bis 7 durchzuführen.

9. Computerprogrammprodukt mit Programmcode, der auf einem maschinenlesbaren Träger gespeichert ist, zur Durchführung des Verfahrens (200, 300) nach einem der Ansprüche 1 bis 7, wenn das Programm auf einem Navigationsgerät (410) ausgeführt wird.

## Claims

1. Method (200) for simplifying a description of a route (100) represented by a list of route points (1-9, 104), the method (200) having the following steps of:
- reading in (210) a route (100) mapped by a list of route points (104) which is represented by a plurality of route points (104), each route point (104) representing a different partial segment (102) of a route (100) from a digital road map;
- changing (220) the list of route points (104) in accordance with a predetermined algorithm in order to obtain a changed list of route points (1-9) which represents the route (100), an algorithm being used in the changing step (220), the use of which results in every nth route point (104) being removed from the list, the variable n being a natural number; and
- storing (230) the changed list of route points (1-9) in order to simplify the description of the route (100).

2. Method (200) according to Claim 1, **characterized in that** route points (104) representing geographical coordinates are read in in the step of reading in (210) the route (100).

3. Method (200) according to one of the preceding steps, **characterized in that** an algorithm is used in the changing step (220), the use of which results in those route points (104) which represent a partial segment (102) of the route (100) which maps a route section shorter than a predetermined route length being removed from the list.

4. Method (200) according to one of the preceding claims, **characterized in that** the method (200) also has a step of receiving further route points (108), the further route points (108) representing partial segments (104) of an alternative of a section of the route (100), and at least one of the further route points (108) being included in the list of route points (1-9) in the changing step (220).

5. Method (200) according to one of the preceding claims, **characterized in that** additional route points (108) are included in the list of route points (1-9) for the route (100) in the changing step (220), the additional route points (108) representing partial segments (102) of an alternative of a section of the route (100).

6. Method (200) according to one of the preceding claims, **characterized in that** the method (200) is executed repeatedly during the journey of a vehicle (400), at least one new route point (110) which represents a current position of the vehicle (400) being read in during the journey of the vehicle (400) in the reading-in step (210) after a preceding execution cycle of the method (200) in a subsequent execution cycle of the method (200), the route of the vehicle (400) being updated by the repeated execution of the method (200).

7. Method (200) according to one of the preceding claims, **characterized in that** the method (200) also has a step of detecting the current position of the vehicle (400), the method (200) also a step of comparing the detected current position of the vehicle (400) with a partial section (102) of the route (100) represented by a route point (110), a route point (110) representing the currently travelled partial section (102) of the route (100) being added to the list in the step of changing (220) the list if a route point (110) which represents the currently travelled partial section of the route (100) is not stored in the list.

8. Navigation device (410) which is designed to carry out the steps of a method (200, 300) according to one of Claims 1 to 7.

9. Computer program product having program code which is stored on a machine-readable carrier for carrying out the method (200, 300) according to one of Claims 1 to 7 when the program is executed on a navigation device (410).

## Revendications

1. Procédé (200) de simplification d'une description d'un itinéraire (100) qui est représenté par une liste de points d'itinéraire (1-9, 104), le procédé (200) comprenant les étapes suivantes :
- chargement (210) d'un itinéraire (100) qui est représenté par une liste de points d'itinéraire (104), laquelle représente une pluralité de points d'itinéraire (104), chaque point d'itinéraire (104) représentant un segment partiel (102) différent d'un itinéraire (100) d'une carte routière numérique ;
- modification (220) de la liste de points d'itinéraire (104) conformément à un algorithme prédéfini afin d'obtenir une liste modifiée de points d'itinéraire (1-9), laquelle représente l'itinéraire (100), un algorithme étant employé dans l'étape de modification (220), lors de l'utilisation duquel chaque n-ème point d'itinéraire (104) est supprimé de la liste, la variable n représentant un nombre naturel ; et
- mise en mémoire (230) de la liste modifiée de points d'itinéraire (1-9) afin d'obtenir une simplification de la description de l'itinéraire (100).

2. Procédé (200) selon la revendication 1, **caractérisé en ce que** dans l'étape de chargement (210) de l'itinéraire (100), des points d'itinéraire (104) qui représentent des coordonnées géographiques sont chargés.

3. Procédé (200) selon l'une des revendications précédentes, **caractérisé en ce que** dans l'étape de modification (220) est employé un algorithme qui, lorsqu'il est utilisé, provoque une suppression de la liste des points d'itinéraire (104) qui représentent un segment partiel (102) de l'itinéraire (100), lequel forme une portion de trajet qui est plus courte qu'une longueur de trajet prédéfinie.

4. Procédé (200) selon l'une des revendications précédentes, **caractérisé en ce que** le procédé (200) comprend en outre une étape de réception de points d'itinéraire supplémentaires (108), les points d'itinéraire supplémentaires (108) représentant des segments partiels (104) d'une alternative d'une portion de l'itinéraire (100) et au moins l'un des points d'itinéraire supplémentaires (108) étant enregistré dans la liste des points d'itinéraire (1-9) dans l'étape de modification (220).

5. Procédé (200) selon l'une des revendications précédentes, **caractérisé en ce que** dans l'étape de modification (220), des points d'itinéraire supplémentaires (108) sont enregistrés dans la liste des points d'itinéraire (1-9) pour l'itinéraire (100), les points d'itinéraire supplémentaires (108) représentant des segments partiels (102) d'une alternative d'une portion de l'itinéraire (100).

6. Procédé (200) selon l'une des revendications précédentes, **caractérisé en ce que** le procédé (200) est exécuté de manière répétée pendant le déplacement d'un véhicule (400), au moins un nouveau point d'itinéraire (110), qui représente une position actuelle du véhicule (400), étant chargé pendant le déplacement du véhicule (400) après un cycle d'exécution précédent du procédé (200), à l'étape de chargement (210) au cours d'un cycle d'exécution suivant du procédé (200), l'itinéraire du véhicule (400) étant actualisé par l'exécution répétée du procédé (200).

7. Procédé (200) selon l'une des revendications précédentes, **caractérisé en ce que** le procédé (200) comprend en outre une étape de détection de la position actuelle du véhicule (400), le procédé (200) en outre comprend une étape de comparaison de la position actuelle détectée du véhicule (400) avec une portion partielle (102) de l'itinéraire (100) représentée par un point d'itinéraire (110), un point d'itinéraire (110) qui représente la portion partielle (102) actuellement parcourue de l'itinéraire (100) étant ajouté à la liste dans l'étape de modification (220) de la liste lorsqu'un point d'itinéraire (110) qui représente la portion partielle actuellement parcourue de l'itinéraire (100) n'est pas enregistré dans la liste.

8. Appareil de navigation (410) qui est configuré pour exécuter les étapes d'un procédé (200, 300) selon l'une des revendications 1 à 7.

9. Produit de programme informatique comprenant un code de programme qui est enregistré sur un support lisible par machine en vue de mettre en oeuvre le procédé (200, 300) selon l'une des revendications 1 à 7 lorsque le programme est exécuté sur un appareil de navigation (410).
